# EUROPÄISCHE PATENTSCHRIFT

(11) **EP 3 831 571 B1**
(45) Veröffentlichungstag und Bekanntmachung des Hinweises auf die Patenterteilung: **01.06.2022**
(21) Anmeldenummer: 19214205.7
(22) Anmeldetag: 06.12.2019
(51) Int. Cl.: B29C 48/285, B29C 48/85, C09D 5/03, C09D 7/80

(54) **VERFAHREN UND VORRICHTUNG ZUR HERSTELLUNG EINER PULVERLACKSCHMELZE**
METHOD AND DEVICE FOR PRODUCING A POWDER COATING MELT
PROCÉDÉ ET DISPOSITIF DE FABRICATION D'UNE MASSE FONDUE DE LAQUE EN POUDRE

(43) Veröffentlichungstag der Anmeldung: 09.06.2021
(73) Patentinhaber: Coperion GmbH, 70469 Stuttgart (DE)
(72) Erfinder: Stirner, Thorsten, 75203 Königsbach-Stein (DE)
(74) Vertreter: Rau, Schneck & Hübner Patentanwälte Rechtsanwälte PartGmbB

(56) Entgegenhaltungen:
- EP-A1- 2 896 661
- EP-A1- 3 144 352
- CH-A5- 694 015
- CN-A- 106 378 919
- DE-A1- 4 028 567

## Beschreibung

Die Erfindung betrifft ein Verfahren und eine Vorrichtung zur Herstellung einer Pulverlackschmelze.

Zur Herstellung von Pulverlackpulver wird eine Pulverlackvormischung mittels einer Schneckenmaschine aufbereitet und die aufbereitete Pulverlackschmelze extrudiert. Die extrudierte Pulverlackschmelze wird anschließend abgekühlt und zu Pulverlackpulver vermahlen. Das Pulverlackpulver wird anschließend in einen Nutzanteil und einen Feinanteil getrennt. Der Nutzanteil, der Pulverlackpartikel mit einer gewünschten Partikelabmessung bzw. Korngröße umfasst, wird zur Pulverlackbeschichtung verwendet, wohingegen der Feinanteil, der kleinere Pulverlackpartikel umfasst, nicht zur Pulverlackbeschichtung geeignet ist. Darüber hinaus fallen bei der Pulverlackbeschichtung Pulverlackpartikel an, beispielsweise in Partikelfiltern von Sprühkabinen, die nicht zur Pulverlackbeschichtung geeignet sind. Derartige Pulverlackpartikel bzw. Pulverlackfeinpartikel werden auch als Fines oder Super-Fines bezeichnet.

Aus der DE 40 28 567 A1 ist ein Verfahren zur Wiederverwendung von Pulverlack-Overspray bekannt. Als Pulverlack-Overspray werden Pulverlackpartikel bezeichnet, die bei der Applikation das Substrat nicht erreichen oder vom Substrat wieder abfallen. Der Pulverlack-Overspray wird bei der Pulverlackproduktion im Laufe des Extrusionsprozesses als Schmelze in den Pulverlackproduktionsprozess zurückgeführt.

Aus der CH 694 015 A5 ist ein Verfahren zur Herstellung eines lösungsmittelfreien Beschichtungsmaterials für Pulverbeschichtungen bekannt. Aus der EP 3 144 352 A1 und der EP 2 896 661 A1 sind Verfahren zur Herstellung von Pulverlack mit Effektpigmenten bekannt.

Aus der CN 106 378 919 A ist ein Verfahren und ein Extruder zur Pulverbeschichtung bekannt.

Der Erfindung liegt die Aufgabe zugrunde, ein Verfahren zur Herstellung einer Pulverlackschmelze zu schaffen, das auf einfache, flexible und effiziente Weise eine Wiederverwertung von Pulverlackpartikeln ermöglicht.

Diese Aufgabe wird durch ein Verfahren mit den Merkmalen des Anspruchs 1 gelöst. Erfindungsgemäß wurde erkannt, dass die wiederzuverwertenden Pulverlackpartikel aus einer homogenisierten Pulverlackschmelze bzw. einem Pulverlackpulver entstanden sind und somit bei einer Wiederverwertung nicht mehr einer intensiven Homogenisierung unterworfen werden müssen. Dementsprechend wird bei dem erfindungsgemäßen Verfahren zunächst aus einer Pulverlackvormischung eine erste Pulverlackschmelze mittels der Schneckenmaschine erzeugt. In diese erste Pulverlackschmelze werden die wiederzuverwertenden Pulverlackpartikel zugeführt, die anschließend lediglich noch mit der ersten Pulverlackschmelze mittels der Schneckenmaschine vermischt werden, sodass eine die wiederzuverwertenden Pulverlackpartikel umfassende zweite Pulverlackschmelze erzeugt wird. Die zweite Pulverlackschmelze wird anschließend aus der Schneckenmaschine ausgetragen bzw. extrudiert und in üblicher Weise zu Pulverlackpulver weiter verarbeitet. Die wiederzuverwertenden Pulverlackpartikel sind insbesondere Pulverlackfeinpartikel.

Die erste Pulverlackschmelze ist vorzugsweise fertig aufbereitet und zur Weiterverarbeitung zu Pulverlackpulver geeignet. Die erste Pulverlackschmelze ist insbesondere plastifiziert und homogenisiert. Die Pulverlackpartikel werden nach dem Zuführen in die erste Pulverlackschmelze und vor dem Austragen insbesondere homogen eingemischt und/oder angeschmolzen, vorzugsweise vollständig aufgeschmolzen.

Dadurch, dass die Pulverlackpartikel lediglich in die erste Pulverlackschmelze eingemischt werden, wird die Erzeugung bzw. Aufbereitung der ersten Pulverlackschmelze aus der Pulverlackvormischung nicht beeinträchtigt. Die erste Pulverlackschmelze kann in der üblichen Qualität und/oder mit dem üblichen Durchsatz hergestellt werden. Anschließend können die Pulverlackpartikel in einfacher und flexibler Weise in die erste Pulverlackschmelze eingemischt werden. Die zugeführte Menge an Pulverlackpartikeln kann in weiten Bereichen variiert werden, insbesondere zwischen Null und einer Einzugsgrenze. Eine intensive Homogenisierung der eingemischten, insbesondere angeschmolzenen bzw. aufgeschmolzenen Pulverlackpartikel ist mittels der Schneckenmaschine nicht erforderlich.

Die Schneckenmaschine ist insbesondere als Mehrwellen-Schneckenmaschine, vorzugsweise als Zweiwellen-Schneckenmaschine ausgebildet. Die Mehrwellen-Schneckenmaschine umfasst insbesondere mindestens zwei gleichsinnig drehantreibbare Behandlungselementwellen. Die mindestens zwei Behandlungselementwellen sind vorzugsweise einander dichtkämmend ausgebildet.

Die Zuführ-Schneckenmaschine umfasst ein Gehäuse, in dem mindestens eine Gehäusebohrung ausgebildet ist. Das Gehäuse weist eine Zuführöffnung auf, in die insbesondere ein Einlauftrichter mündet. In der mindestens einen Gehäusebohrung ist mindestens eine Schneckenwelle drehbar angeordnet. Vorzugsweise sind in dem Gehäuse mindestens zwei Gehäusebohrungen ausgebildet, die einander durchdringen. In den mindestens zwei Gehäusebohrungen sind mindestens zwei Schneckenwellen drehbar angeordnet. Die Zuführ-Schneckenmaschine ist insbesondere als Seitenbeschickungsmaschine ausgebildet. Die Zuführ-Schneckenmaschine ist insbesondere seitlich an ein Gehäuse der Schneckenmaschine angeschlossen. Die Zuführ-Schneckenmaschine ist mittels mindestens einer Kühleinrichtung, beispielsweise einer Druckluftkühleinrichtung und/oder einer Wasserkühleinrichtung, kühlbar. Die mindestens eine Kühleinrichtung dient zur Kühlung des Einlauftrichters und/oder des Gehäuses und/oder der mindestens einen Schneckenwelle der Zuführ-Schneckenmaschine.

Der Einlauftrichter ist vorzugsweise doppelwandig ausgebildet. Aufgrund der doppelwandigen Ausbildung umfasst der Einlauftrichter insbesondere einen Kühlkanal. Der Kühlkanal ist insbesondere Teil mindestens einer Kühleinrichtung. Der Kühlkanal ist von einem Kühlfluid durchströmbar, beispielsweise von Druckluft oder Wasser. Der gekühlte Einlauftrichter verhindert ein Anhaften der Pulverlackpartikel.

Die Zuführ-Schneckenmaschine gewährleistet eine einfache und gleichmäßige Zuführung der Pulverlackpartikel in die in der Schneckenmaschine befindliche Pulverlackschmelze. Die Zuführ-Schneckenmaschine umfasst mindestens eine Schneckenwelle, vorzugsweise mindestens zwei Schneckenwellen. Die Zuführ-Schneckenmaschine ist vorzugsweise seitlich an die Schneckenmaschine angeschlossen, sodass die Pulverlackpartikel durch eine seitliche Zuführöffnung in die Schneckenmaschine zugeführt werden.

Ein Verfahren nach Anspruch 2 gewährleistet eine einfache, flexible und effiziente Wiederverwertung der Pulverlackpartikel. Aufgrund der maximalen Partikelabmessung Aₘₐₓ eignen sich die Pulverlackpartikel nicht zur Verwendung als Pulverlackpulver, jedoch zur Wiederverwertung. Die zugeführten Pulverlackpartikel können auf einfache Weise in die erste Pulverlackschmelze eingemischt werden. Die %-Angaben bezeichnen die Partikelanzahl oder den Masseanteil. Die maximale Partikelabmessung Aₘₐₓ bezeichnet insbesondere einen maximalen Korndurchmesser.

Ein Verfahren nach Anspruch 3 gewährleistet eine einfache, flexible und effiziente Wiederverwertung der Pulverlackpartikel. Aufgrund der maximalen Partikelabmessung Aₘₐₓ können die Pulverlackpartikel einfach zugeführt und in die erste Pulverlackschmelze eingemischt werden. Die %-Angaben bezeichnen die Partikelanzahl oder den Masseanteil. Die maximale Partikelabmessung Aₘₐₓ bezeichnet insbesondere einen maximalen Korndurchmesser.

Ein Verfahren nach Anspruch 4 gewährleistet eine einfache, flexible und effiziente Wiederverwertung der Pulverlackpartikel. Dadurch, dass die Pulverlackpartikel vor dem Austragen durch die Austragsöffnung der Schneckenmaschine aufgeschmolzen werden, sind die Pulverlackpartikel optimal in die Pulverlackschmelze eingebunden, sodass die zweite Pulverlackschmelze homogen ist. Durch das Zuführen der Pulverlackpartikel wird die Austrittstemperatur der zweiten Pulverlackschmelze erniedrigt. Dies ist vorteilhaft für die Abkühlung und Erstarrung der zweiten Pulverlackschmelze nach dem Austragen.

Ein Verfahren nach Anspruch 5 gewährleistet eine einfache, flexible und effiziente Wiederverwertung der Pulverlackpartikel. Die Schneckenmaschine umfasst in einer Förderrichtung nacheinander eine Einzugszone, eine Plastifizierzone und eine Homogenisierungszone. In der Einzugszone wird die Pulverlackvormischung in die Schneckenmaschine zugeführt und zu der Plastifizierzone gefördert. In der Plastifizierzone wird die Pulverlackvormischung aufgeschmolzen und anschließend in der Homogenisierungszone homogenisiert. Die Pulverlackpartikel werden stromabwärts der Plastifizierzone zugeführt, sodass das Plastifizieren der Pulverlackvormischung möglichst wenig beeinflusst bzw. beeinträchtigt wird. Vorzugsweise werden die Pulverlackpartikel stromabwärts der Homogenisierungszone zugeführt, sodass die Pulverlackvormischung plastifiziert und die erste Pulverlackschmelze optimal homogenisiert ist, bevor die Pulverlackpartikel zugeführt werden. Hierdurch wird die Aufbereitung der Pulverlackvormischung zu der ersten Pulverlackschmelze im Wesentlichen nicht beeinträchtigt, sodass die erste Pulverlackschmelze mit einer hohen Qualität und einem hohen Durchsatz aufbereitet werden kann. In der Plastifizierzone umfasst die Schneckenmaschine vorzugsweise Knetelemente, insbesondere Knetscheiben. Hierdurch wird ein schnelles und effizientes Plastifizieren der Pulverlackvormischung gewährleistet. In der Homogenisierungszone umfasst die Schneckenmaschine vorzugsweise Knetelemente, insbesondere Knetscheiben. Hierdurch wird eine effiziente Homogenisierung der Polymerschmelze gewährleistet.

Ein Verfahren nach Anspruch 6 gewährleistet eine einfache, flexible und effiziente Wiederverwertung der Pulverlackpartikel. In der Zuführzone werden die Pulverlackpartikel der Schneckenmaschine zugeführt. Hierzu dient vorzugsweise eine Zuführeinrichtung, die insbesondere an die Schneckenmaschine angeschlossen ist. Die Zuführzone ist in einer Förderrichtung stromabwärts zu der Plastifizierzone angeordnet, sodass die Pulverlackpartikel in die plastifizierte Pulverlackvormischung bzw. in die Pulverlackschmelze zugeführt werden. Vorzugsweise werden die Pulverlackpartikel stromabwärts zu einer Homogenisierungszone zugeführt, sodass die Pulverlackpartikel in die fertig aufbereitete Polymerschmelze zugeführt werden und die Plastifizierung und Homogenisierung der Pulverlackvormischung im Wesentlichen nicht beeinträchtigt wird. Stromabwärts zu der Zuführzone ist eine Mischzone angeordnet, in der die zugeführten Pulverlackpartikel in die erste Pulverlackschmelze eingemischt werden, sodass vor dem Austragen keine freien Pulverlackpartikel, also keine nicht in die Pulverlackschmelze eingebundenen Pulverlackpartikel, mehr vorhanden sind. Die Mischzone ist vorzugsweise derart ausgebildet und/oder angeordnet, dass einerseits eine Einmischung der zugeführten Pulverlackpartikel vor dem Austragen gewährleistet ist und andererseits möglichst geringe Scherkräfte auf die Pulverlackpartikel bis zum Austragen wirken. Die Mischzone umfasst mindestens ein Förderelement, insbesondere mindestens ein Schneckenelement und/oder mindestens ein Knetelement, insbesondere mindestens eine Knetscheibe. Die Mischzone umfasst beispielsweise mehrere nacheinander angeordnete Förderelemente, sodass die erste Pulverlackschmelze und die zugeführten Pulverlackpartikel ausreichend lange zusammen gefördert werden, um vermischt zu werden und/oder die Pulverlackpartikel anzuschmelzen, vorzugsweise vollständig aufzuschmelzen. Die Mischzone umfasst beispielsweise mehrere nacheinander angeordnete Knetelemente, insbesondere mehrere Knetscheiben. Hierdurch wird das Einmischen verbessert. Vorzugsweise sind in der Mischzone nacheinander mindestens ein Förderelement und mindestens ein Knetelement angeordnet. Durch das mindestens eine Förderelement wird die erste Pulverlackschmelze mit den zugeführten Pulverlackpartikeln zunächst von der Zuführzone weg gefördert, sodass in der Zuführzone kein Rückstau entsteht. Mittels des mindestens einen Knetelements werden die zugeführten Pulverlackpartikel in die erste Pulverlackschmelze auf einer kurzen Länge eingemischt.

Ein Verfahren nach Anspruch 7 gewährleistet eine einfache, flexible und effiziente Wiederverwertung der Pulverlackpartikel. Die Zuführeinrichtung ermöglicht ein automatisiertes Zuführen der Pulverlackpartikel. Die Zuführeinrichtung umfasst insbesondere einen gravimetrischen Dosierer und/oder einen volumetrischen Dosierer und/oder eine Zuführ-Schneckenmaschine. Die Zuführ-Schneckenmaschine ist insbesondere als Seitenbeschickungsmaschine ausgebildet. Die Zuführ-Schneckenmaschine umfasst vorzugsweise zwei Schneckenwellen, die insbesondere gleichsinnig drehantreibbar sind. Die Zuführ-Schneckenmaschine ist an die Schneckenmaschine angeschlossen. Hierzu umfasst die Schneckenmaschine ein Gehäuse mit einer Zuführöffnung, durch die die Zuführ-Schneckenmaschine die Pulverlackpartikel in die Schneckenmaschine zuführt.

Ein Verfahren nach Anspruch 8 gewährleistet eine einfache, flexible und effiziente Wiederverwertung der Pulverlackpartikel. Bei der Herstellung von Pulverlackpulver wird die erstarrte Pulverlackschmelze zu einem Pulverlackpulver vermahlen, das anschließend in mindestens zwei Partikelgrößenfraktionen getrennt wird. Das Trennen erfolgt mittels einer Trenneinrichtung, die beispielsweise als Sieb oder Zyklon ausgebildet ist. Die mittels der Trenneinrichtung abgetrennten Pulverlackpartikel, die nicht für die Pulverlackbeschichtung geeignet sind, werden zu der Schneckenmaschine zurückgeführt und dort, beispielsweise mittels einer Zuführeinrichtung, der ersten Pulverlackschmelze zugeführt. Die nicht zur Pulverlackbeschichtung verwendbaren Pulverlackpartikel werden somit unmittelbar der Wiederverwertung zugeführt.

Ein Verfahren nach Anspruch 9 gewährleistet eine einfache, flexible und effiziente Wiederverwertung der Pulverlackpartikel. Der Zuführeinsatz ist mit einem Gehäuse der Zuführ-Schneckenmaschine verbunden und mündet in eine Gehäuseöffnung eines Gehäuses der Schneckenmaschine, sodass eine Zuführöffnung zum Zuführen der Pulverlackpartikel ausgebildet wird. Der Zuführeinsatz ist lösbar mit dem Gehäuse der Zuführ-Schneckenmaschine und/oder mit dem Gehäuse der Schneckenmaschine verbunden. Der Zuführeinsatz ist zur Reinigung austauschbar bzw. ausbaubar. Vorzugsweise umfasst der Zuführeinsatz einen Flansch und ein daran befestigtes Zuführkanalbauteil. Der Zuführeinsatz umfasst vorzugsweise mindestens ein Kühlelement. Das mindestens eine Kühlelement ist vorzugsweise als Kühlkanal ausgebildet. Vorzugsweise ist der Flansch und/oder das Zuführkanalbauteil mittels eines Kühlfluids kühlbar. Hierzu umfasst der Flansch und/oder das Zuführkanalbauteil mindestens ein Kühlelement, insbesondere mindestens einen Kühlkanal. Der mindestens eine Kühlkanal ist in dem Flansch und/oder dem Zuführkanalbauteil ausgebildet. Durch die Kühlung wird ein Anschmelzen der Pulverlackpartikel in dem Zuführeinsatz und/oder in der Zuführ-Schneckenmaschine reduziert, insbesondere weitestgehend verhindert. Beispielsweise ist in dem Flansch und in dem Zuführkanalbauteil ein jeweiliger Kühlkanal ausgebildet, sodass der Flansch und das Zuführkanalbauteil separat und/oder gemeinsam gekühlt werden können. Mittels einer Steuereinrichtung können die entsprechenden Kühlkreisläufe getrennt voneinander und/oder gemeinsam angesteuert und betrieben werden. Beispielsweise wird der Kühlkreislauf für den Flansch ständig betrieben und der Kühlkreislauf für das Zuführkanalbauteil in Abhängigkeit von bestimmten Betriebszuständen betrieben, wie beispielsweise bei einem Stillstand der Schneckenmaschine oder bei einer vordefinierten Temperaturüberschreitung im Bereich des Zuführkanalbauteils.

Ein Verfahren nach Anspruch 10 gewährleistet eine einfache, flexible und effiziente Wiederverwertung der Pulverlackpartikel. Durch die Kühlung des Einlauftrichters und/oder des Gehäuses und/oder der mindestens einen Schneckenwelle wird ein Anschmelzen der Pulverlackpartikel an den Einlauftrichter und/oder an einer Innenwand des Gehäuses und/oder an der mindestens einen Schneckenwelle reduziert bzw. im Wesentlichen verhindert. Zur Kühlung dient mindestens eine Kühleinrichtung, die beispielsweise als Druckluftkühleinrichtung und/oder Wasserkühleinrichtung ausgebildet ist. In einem Einlauftrichter und/oder einem Gehäuse der Zuführ-Schneckenmaschine und/oder in der mindestens einen Schneckenwelle ist vorzugsweise mindestens ein Kühlkanal ausgebildet. Der Kühlkanal wird zur Kühlung von einem Kühlfluid durchströmt.

Der Erfindung liegt ferner die Aufgabe zugrunde eine Vorrichtung zur Herstellung einer Pulverlackschmelze zu schaffen, die auf einfache, flexible und effiziente Weise eine Wiederverwertung von Pulverlackpartikeln ermöglicht.

Diese Aufgabe wird durch eine Vorrichtung mit den Merkmalen des Anspruchs 11 gelöst. Die Vorteile der erfindungsgemäßen Vorrichtung entsprechen den Vorteilen des erfindungsgemäßen Verfahrens. Die Vorrichtung kann insbesondere auch mit den Merkmalen mindestens eines der Ansprüche 1 bis 10 weitergebildet werden.

Die Schneckenmaschine ist insbesondere als Mehrwellen-Schneckenmaschine, vorzugsweise als Zweiwellen-Schneckenmaschine ausgebildet. Die Schneckenmaschine umfasst ein Gehäuse, mindestens eine in dem Gehäuse ausgebildete Gehäusebohrung und mindestens eine in der mindestens einen Gehäusebohrung angeordnete und drehbar gelagerte Behandlungselementwelle. Bei einer Ausbildung als Mehrwellen-Schneckenmaschine sind in dem Gehäuse mindestens zwei einander durchdringende Gehäusebohrungen ausgebildet, in denen mindestens zwei Behandlungselementwellen angeordnet sind. Die mindestens zwei Behandlungselementwellen sind vorzugsweise gleichsinnig drehantreibbar ausgebildet. Die mindestens zwei Behandlungselementwellen sind insbesondere einander dichtkämmend ausgebildet.

Die Vorrichtung umfasst vorzugsweise eine Steuereinrichtung zur Steuerung der Schneckenmaschine und/oder der Zuführeinrichtung. Mittels der Steuereinrichtung ist insbesondere eine Kühleinrichtung zur Kühlung der Zuführeinrichtung steuerbar.

Eine Vorrichtung nach Anspruch 12 gewährleistet eine einfache, flexible und effiziente Wiederverwertung der Pulverlackpartikel. Die Schneckenmaschine umfasst in einer Förderrichtung nacheinander eine Einzugszone, eine Plastifizierzone und eine Homogenisierungszone. Dadurch, dass die zweite Zuführöffnung zwischen der Plastifizierzone und der Austragsöffnung angeordnet ist, ist in einfacher Weise ein Einmischen der Pulverlackpartikel in die plastifizierte Pulverlackvormischung bzw. die Pulverlackschmelze möglich. Vorzugsweise ist die zweite Zuführöffnung zwischen der Homogenisierungszone und der Austragsöffnung angeordnet. Hierdurch werden die Pulverlackpartikel in die fertig aufbereitete Pulverlackschmelze zugeführt, sodass die Aufbereitung der Pulverlackschmelze aus der Pulverlackvormischung im Wesentlichen nicht beeinflusst bzw. beeinträchtigt wird. Vorzugsweise umfasst die Schneckenmaschine stromabwärts zu der zweiten Zuführöffnung eine Mischzone, die stromaufwärts zu der Austragsöffnung angeordnet ist. Die Schneckenmaschine umfasst in der Mischzone mindestens ein Förderelement und/oder mindestens ein Knetelement. Vorzugsweise umfasst die Schneckenmaschine in der Mischzone nacheinander mindestens ein Förderelement und mindestens ein Knetelement.

Eine Vorrichtung nach Anspruch 13 gewährleistet eine einfache, flexible und effiziente Wiederverwertung der Pulverlackpartikel. Vorzugsweise umfasst die Zuführeinrichtung einen gravimetrischen oder volumetrischen Dosierer, der die Pulverlackpartikel der Zuführ-Schneckenmaschine zuführt. Die Pulverlackpartikel werden vorzugsweise von einer Trenneinrichtung bereitgestellt.

Eine Vorrichtung nach Anspruch 14 gewährleistet eine einfache, flexible und effiziente Wiederverwertung der Pulverlackpartikel. Die Zuführeinrichtung umfasst vorzugsweise eine Zuführ-Schneckenmaschine, die mittels des Zuführeinsatzes an die Schneckenmaschine angeschlossen ist. Der Zuführeinsatz umfasst insbesondere einen Flansch und ein daran befestigtest Zuführkanalbauteil. Der Zuführeinsatz umfasst mindestens ein Kühlelement, insbesondere mindestens einen Kühlkanal. Der mindestens eine Kühlkanal dient zur Kühlung des Flansches und/oder des Zuführkanalbauteils. Der Flansch ist insbesondere an einem Gehäuse der Zuführ-Schneckenmaschine befestigt, sodass sich das Zuführkanalbauteil in eine Gehäuseöffnung des Gehäuses der Schneckenmaschine erstreckt.

Weitere Vorteile, Merkmale und Einzelheiten der Erfindung ergeben sich aus der nachfolgenden Beschreibung mehrerer Ausführungsbeispiele. Es zeigen:
- Fig. 1: eine teilweise geschnitten dargestellte Vorrichtung zur Herstellung einer Pulverlackschmelze gemäß einem ersten Ausführungsbeispiel mit einer Mehrwellen-Schneckenmaschine zur Aufbereitung einer Pulverlackvormischung und einer daran angeschlossenen Zuführeinrichtung mit einer Zuführ-Schneckenmaschine zum Zuführen von Pulverlackpartikeln,
- Fig. 2: eine teilweise geschnittene Draufsicht auf die Vorrichtung in Fig. 1,
- Fig. 3: eine perspektivische Ansicht eines kühlbaren Zuführeinsatzes zum Anschluss der Zuführ-Schneckenmaschine an die Mehrwellen-Schneckenmaschine,
- Fig. 4: eine teilweise geschnitten dargestellte Vorrichtung zur Herstellung einer Pulverlackschmelze gemäß einem zweiten Ausführungsbeispiel, und
- Fig. 5: eine teilweise geschnittene Draufsicht auf die Vorrichtung in Fig. 4.

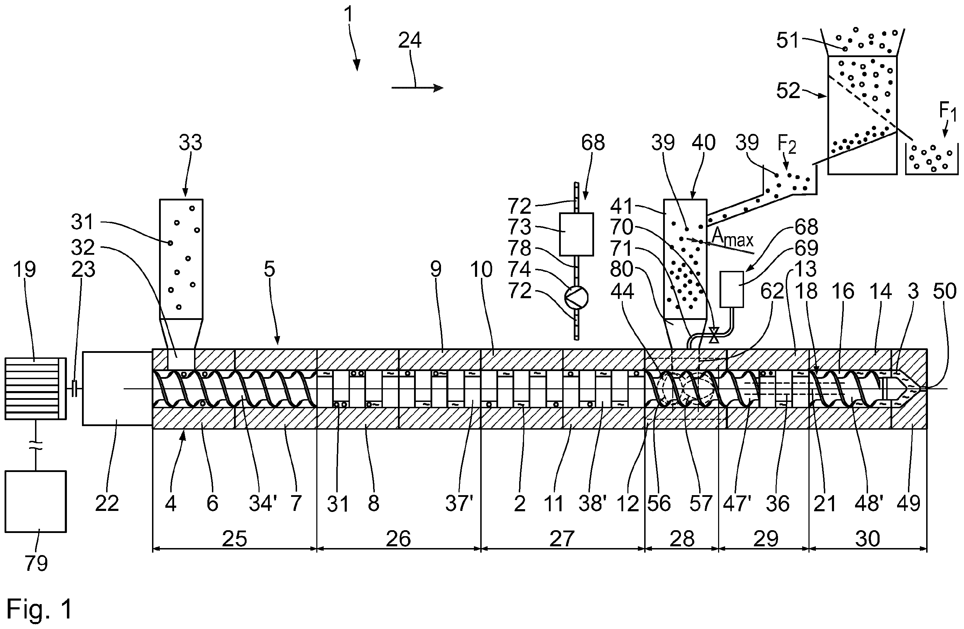

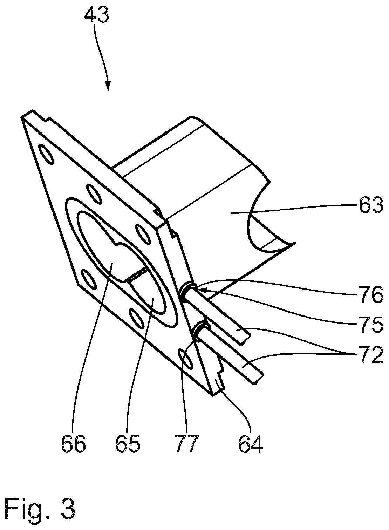

Nachfolgend ist anhand der Figuren 1 bis 3 ein erstes Ausführungsbeispiel der Erfindung beschrieben. Die in den Figuren dargestellte Vorrichtung 1 dient zur Herstellung einer Pulverlackschmelze 2, 3.

Die Vorrichtung 1 umfasst eine Mehrwellen-Schneckenmaschine 4, die ein Gehäuse 5 aus mehreren nacheinander angeordneten Gehäuseabschnitten 6 bis 14 aufweist. Die Gehäuseabschnitte 6 bis 14 sind zur Ausbildung des Gehäuses 5 miteinander verbunden. In dem Gehäuse 5 sind zwei zueinander parallele und einander durchdringende Gehäusebohrungen 15, 16 ausgebildet, die im Querschnitt die Form einer liegenden Acht haben. In den Gehäusebohrungen 15, 16 sind konzentrisch zwei Behandlungselementwellen 17, 18 angeordnet, die von einem Antriebsmotor 19 um zugehörige Drehachsen 20, 21 drehantreibbar sind. Zwischen den Behandlungselementwellen 17, 18 und dem Antriebsmotor 19 ist ein Verzweigungsgetriebe 22 angeordnet. Zwischen dem Antriebsmotor 19 und dem Verzweigungsgetriebe 22 ist wiederum eine Kupplung 23 angeordnet. Die Behandlungselementwellen 17, 18 werden mittels des Antriebsmotors 19 gleichsinnig, also in gleichen Drehrichtungen um die Drehachsen 20, 21 drehangetrieben.

Die Mehrwellen-Schneckenmaschine 4 weist in einer Förderrichtung 24 nacheinander eine Einzugszone 25, eine Plastifizierzone 26, eine Homogenisierungszone 27, eine Zuführzone 28, eine Mischzone 29 und eine Austragszone 30 auf.

In der Einzugszone 25 wird der Mehrwellen-Schneckenmaschine 4 eine Pulverlackvormischung 31 zugeführt. Hierzu ist in dem ersten Gehäuseabschnitt 6 eine erste Zuführöffnung 32 ausgebildet, durch die die Pulverlackvormischung 31 in die Gehäusebohrungen 15, 16 einführbar ist. Zur Bereitstellung der Pulverlackvormischung 31 umfasst die Vorrichtung 1 eine erste Zuführeinrichtung 33, die an die erste Zuführöffnung 32 angeschlossen ist. Die erste Zuführeinrichtung 33 umfasst beispielsweise einen gravimetrischen Dosierer.

In der Einzugszone 25 wird die zugeführte Pulverlackvormischung 31 zu der Plastifizierzone 26 gefördert. Die Behandlungselementwellen 17, 18 umfassen in der Einzugszone 25 Schneckenelemente 34, 34', die drehfest auf zugehörigen Wellen 35, 36 angeordnet sind und zum Fördern der Pulverlackvormischung 31 dienen.

In der Plastifizierzone 26 wird die zugeführte Pulverlackvormischung 31 aufgeschmolzen. Zum Aufschmelzen und Dispergieren sind in der Plastifzierzone 26 auf den Wellen 35, 36 Knetelemente 37, 37' drehfest angeordnet. Die Knetelemente 37, 37' sind als Knetscheiben ausgebildet. Vorzugsweise sind in der Plastifizierzone 26, Knetblöcke auf den Wellen 35, 36 angeordnet, die mehrere einteilig miteinander ausgebildete Knetscheiben umfassen.

Die in der Plastifizierzone 26 plastifizierte bzw. aufgeschmolzene Pulverlackvormischung 31 wird zu der Homogenisierungszone 27 gefördert. In der Homogenisierungszone 27 wird die plastifizierte Pulverlackvormischung 31 zu einer ersten Pulverlackschmelze 2 homogenisiert. In der Homogenisierungszone 27 wird die plastifizierte Pulverlackvormischung 31 intensiv durchmischt, sodass die erste Pulverlackschmelze 2 am stromabwärtigen Ende der Homogenisierungszone 27 fertig aufbereitet ist. In der Homogenisierungszone 27 sind auf den Wellen 35, 36 Knetelemente 38, 38' drehfest angeordnet. Die Knetelemente 38, 38' sind insbesondere als Knetscheiben ausgebildet. Vorzugsweise sind in der Homogenisierungszone 27 Knetblöcke angeordnet, die aus mehreren einteilig miteinander verbundenen Knetscheiben ausbildet sind.

In der Zuführzone 28 werden der fertig aufbereiteten Pulverlackschmelze 2 Pulverlackpartikel 39 zugeführt. Die Pulverlackpartikel 39 sind nicht zur Pulverlackbeschichtung geeignet und sollen wiederverwertet werden. Durch die Zuführung der Pulverlackpartikel 39 in die erste Pulverlackschmelze 2 wird deren Temperatur reduziert. Dies ist für die weitere Verarbeitung der Pulverlackschmelze 2 vorteilhaft.

Zur Zuführung der Pulverlackpartikel 39 umfasst die Vorrichtung 1 eine zweite Zuführeinrichtung 40. Die zweite Zuführeinrichtung 40 umfasst einen gravimetrischen Dosierer 41, einen Einlauftrichter 80, eine Zuführ-Schneckenmaschine 42 und einen Zuführeinsatz 43. Die Zuführ-Schneckenmaschine 42 ist mittels des Zuführeinsatzes 43 seitlich an das Gehäuse 5 angeschlossen, sodass in der Zuführzone 28 eine zweite Zuführöffnung 44 in dem Gehäuse 5 ausgebildet ist. Die zweite Zuführöffnung 44 mündet in die Gehäusebohrungen 15, 16 bzw. in die Gehäusebohrung 16. Der Dosierer 41 ist mittels des Einlauftrichters 80 an die Zuführ-Schneckenmaschine 42 angeschlossen.

In der Zuführzone 28 sind auf den Wellen 35, 36 Schneckenelemente 45, 45' drehfest angeordnet. Die Schneckenelemente 45, 45' fördern die erste Pulverlackschmelze 2 mit den zugeführten Pulverlackpartikeln 39 zu der Mischzone 29.

In der Mischzone 29 werden die zugeführten Pulverlackpartikel 39 in die erste Pulverlackschmelze 2 eingemischt und darin aufgeschmolzen. Hierzu sind in der Mischzone 29 auf den Wellen 35, 36 nacheinander Schneckenelemente 46, 46' und Knetelemente 47, 47' drehfest angeordnet. Die Schneckenelemente 46, 46' dienen dazu, die erste Pulverlackschmelze 2 mit den zugeführten Pulverlackpartikeln 39 von der zweiten Zuführöffnung 44 weg zu fördern, damit in der Zuführzone 28 kein Rückstau entsteht. Mittels der Knetelemente 47, 47' werden die Pulverlackpartikel 39 möglichst schonend und ohne intensive Scherung in die erste Pulverlackschmelze 2 eingemischt und darin aufgeschmolzen, so dass eine zweite Pulverlackschmelze 3 erzeugt wird. Die Knetelemente 47, 47' sind vorzugsweise als Knetscheiben ausgebildet. In der Mischzone 29 sind beispielsweise Knetblöcke angeordnet, die aus einteilig miteinander verbundenen Knetscheiben ausgebildet sind.

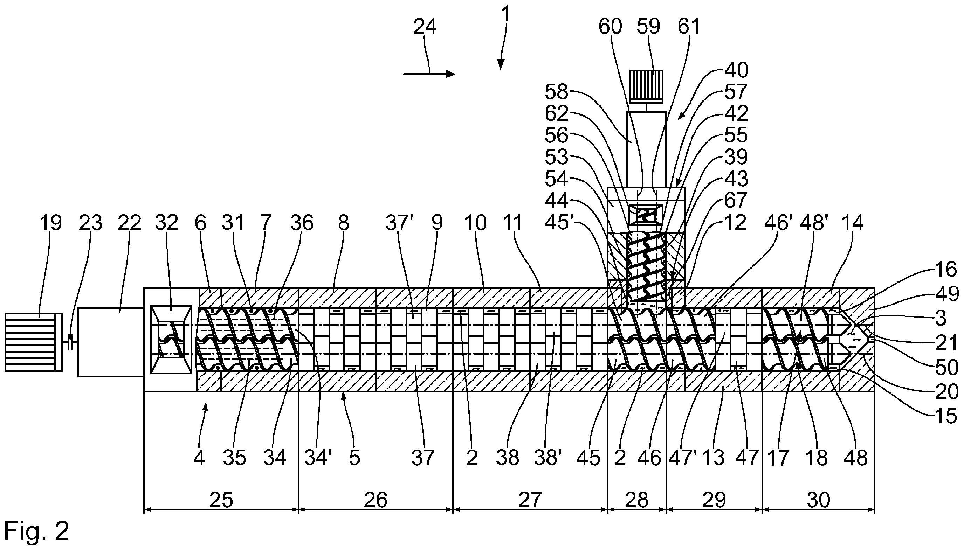

Nach dem Einmischen der Pulverlackpartikel 39 in der Mischzone 29 wird in der Austragszone 30 die zweite Pulverlackschmelze 3 ausgetragen. In der Austragszone 30 sind auf den Wellen 35, 36 Schneckenelemente 48, 48' drehfest angeordnet, um die zweite Pulverlackschmelze 3 auszutragen. An dem letzten Gehäuseabschnitt 14 ist eine das Gehäuse 5 abschließende Düsenplatte 49 angeordnet, die eine Austragsöffnung 50 ausbildet. Die Austragsöffnung 50 kann je nach Ausbildung der Düsenplatte 49 stehend angeordnet sein, sodass das Austragen horizontal erfolgt, oder liegend angeordnet sein, sodass das Austragen vertikal erfolgt. Das vertikale Austragen erfolgt insbesondere drucklos. In den Figuren 1 und 2 ist ein horizontales Austragen veranschaulicht. Die zweite Pulverlackschmelze 3 wird durch die Austragsöffnung 50 ausgetragen. Die zweite Pulverlackschmelze 3 ist fertig aufbereitet, sodass in dieser keine freien Pulverlackpartikel 39 mehr vorliegen. Die Pulverlackpartikel 39 sind beim Austragen eingemischt und aufgeschmolzen.

Nach dem Austragen der zweiten Pulverlackschmelze 3 wird diese in üblicher Weise gekühlt. Die gekühlte und erstarrte Pulverlackschmelze 3 wird anschließend zu Pulverlackpulver 51 vermahlen.

Die Vorrichtung 1 umfasst zum Trennen des Pulverlackpulvers 51 eine Trenneinrichtung 52. Die Trenneinrichtung 52 trennt das zugeführte Pulverlackpulver 51 in eine Nutzfraktion F₁ und in eine Wiederverwertungsfraktion F₂ getrennt. Die Nutzfraktion F₁ ist zur Pulverlackbeschichtung geeignet. Dem gegenüber umfasst die Wiederverwertungsfraktion F₂ die Pulverlackpartikel 39, die nicht zur Pulverlackbeschichtung geeignet sind. Die Pulverlackpartikel 39 werden von der Trenneinrichtung 51 der zweiten Zuführeinrichtung 40 bereitgestellt.

Die Pulverlackpartikel 39 haben jeweils eine maximale Partikelabmessung Aₘₐₓ, wobei für mindestens 50 %, insbesondere für mindestens 70 %, und insbesondere für mindestens 90 % gilt: Aₘₐₓ ≤ 100 µm, insbesondere Aₘₐₓ ≤ 80 µm, und insbesondere Aₘₐₓ ≤ 60 µm. Weiterhin gilt für mindestens 50 %, insbesondere für mindestens 70 %, und insbesondere für mindestens 90 % der Pulverlackpartikeln 39: Aₘₐₓ ≥ 1 µm, Aₘₐₓ ≥ 5 µm, und insbesondere Amax ≥ 10 µm.

Die Pulverlackpartikel 39 gelangen zunächst in den gravimetrischen Dosierer 41. Der gravimetrische Dosierer 41 ist an die Zuführ-Schneckenmaschine 42 angeschlossen und führt dieser die Pulverlackpartikel 39 zu.

Die Zuführ-Schneckenmaschine 42 ist als zweiwellige Seitenbeschickungsmaschine ausgebildet. Die Zuführ-Schneckenmaschine 42 umfasst ein Gehäuse 53 mit darin ausgebildeten Gehäusebohrungen 54, 55, die einander durchdringen und im Querschnitt die Form einer liegenden Acht haben. In den Gehäusebohrungen 54, 55 sind zwei Schneckenwellen 56, 57 angeordnet, die über ein Verzweigungsgetriebe 58 mittels eines Antriebsmotors 59 um zugehörige Drehachsen 60, 61 gleichsinnig drehantreibbar sind. In dem Gehäuse 53 ist eine Zuführöffnung 62 ausgebildet, in die der Dosierer 41 über den Einlauftrichter 80 mündet.

Die Zuführ-Schneckenmaschine 42 ist mittels des Zuführeinsatzes 43 an die Mehrwellen-Schneckenmaschine 4 angeschlossen. Der Zuführeinsatz 43 umfasst ein Zuführkanalbauteil 63 und einen daran befestigten Flansch 64. Der Zuführeinsatz 43 ist mittels des Flansches 64 endseitig an dem Gehäuse 53 derart befestigt, dass in dem Zuführkanalbauteil 63 ausgebildete Bohrungen 65, 66 mit den Gehäusebohrungen 54, 55 fluchten. Die in dem Zuführkanalbauteil 63 ausgebildeten Bohrungen 65, 66 durchdringen einander und haben im Querschnitt die Form einer liegenden Acht. Das Zuführkanalbauteil 63 ist in einer zugehörigen Gehäuseöffnung 67 des Gehäuses 5 angeordnet, sodass die Bohrungen 65, 66 in die Gehäusebohrungen 15, 16 bzw. in die Gehäusebohrung 16 münden und die zweite Zuführöffnung 44 ausbilden.

Der Zuführeinsatz 43 umfasst einen Kühlkanal 75. Der Kühlkanal 75 weist eine Eintrittsöffnung 76 und eine Austrittsöffnung 77 für ein Kühlfluid 78 auf. Der Kühlkanal 75 erstreckt sich durch den Flansch 64 und durch das Zuführkanalbauteil 63.

Die Vorrichtung 1 umfasst zur Kühlung der zweiten Zuführeinrichtung 40 eine Kühleinrichtung 68. Die Kühleinrichtung 68 umfasst eine Druckluftbereitstellungseinheit 69 mit einem Ventil 70. Eine Druckluftleitung 71 führt von der Druckluftbereitstellungseinheit 69 über das Ventil 70 in die Zuführöffnung 62. Mittels Druckluft, die über die Druckluftleitung 71 in die Zuführöffnung 62 zugeführt wird, kann ein Druckluftstrom von der Zuführöffnung 62 durch die Gehäusebohrungen 54, 55 bis zu der zweiten Zuführöffnung 44 erzeugt werden, sodass einerseits ein geringer Überdruck erzeugt wird, der ein Ausströmen von Abwärme aus der Mehrwellen-Schneckenmaschine 4, beispielsweise im Stillstand der Mehrwellen-Schneckenmaschine 4, verhindert und andererseits eine Kühlung des Gehäuses 53 und der Schneckenwellen 56, 57 erzielt werden.

Die Kühleirichtung 68 umfasst ferner eine Kühlleitung 72, einen Wärmetauscher 73 und eine Pumpe 74. Die Kühlleitung 72 ist mit dem Wärmetauscher 73 und der Pumpe 74 verbunden und an die Eintrittsöffnung 76 und die Austrittsöffnung 77 des Kühlkanals 75 angeschlossen. Die Pumpe 74 pumpt das Kühlfluid 78, beispielsweise Wasser, durch die Kühlleitung 72 zu dem Kühlkanal 75 und von dort zu dem Wärmetauscher 73, sodass aus dem Zuführeinsatz 43 Wärme abgeführt und der Zuführeinsatz 43 so gekühlt wird. In dem Wärmetauscher 73 wird das erwärmte Kühlfluid 78 wieder gekühlt.

Der Einlauftrichter 80 ist doppelwandig ausgebildet, sodass der Einlauftrichter 80 einen Kühlkanal ausbildet. Der Kühlkanal ist Teil der Kühleinrichtung 68 und wird beispielsweise mittels Druckluft oder Wasser gekühlt.

Mittels der Kühleinrichtung 68 wird ein Anschmelzen der Pulverlackpartikel 39 an den Einlauftrichter 80, an die Innenwand des Gehäuses 53, die Schneckenwellen 56, 57 und/oder den Zuführeinsatz 43 reduziert und vorzugsweise verhindert.

Die Vorrichtung 1 umfasst eine Steuereinrichtung 79. Die Steuereinrichtung 79 steuert den Antriebsmotor 19, die Zuführeinrichtungen 33, 40 und die Kühleinrichtung 68.

Dadurch, dass die Pulverlackpartikel 39 in die fertig aufbereitete erste Pulverlackschmelze 2 zugeführt werden, wird die Aufbereitung der ersten Pulverlackschmelze 2 nicht beeinflusst bzw. beeinträchtigt. Da die Pulverlackpartikel 39 bereits aufbereitet sind, müssen diese lediglich noch in die erste Pulverlackschmelze 2 eingemischt werden. Das Einmischen kann schonend erfolgen. Da die Aufbereitung der ersten Pulverlackschmelze 2 im Wesentlichen nicht beeinträchtigt wird, kann die Menge an zugeführten Pulverlackpartikeln 39 in weiten Grenzen variiert werden. Die Pulverlackpartikel 39 können somit je nach anfallender Menge flexibel wiederverwertet werden. Die Wiederverwertung der Pulverlackpartikel 39 ist schonend, da keine zweite intensive Durchmischung und Homogenisierung erfolgt. Dies ist vorteilhaft, da die Pulverlackpartikel 39 reaktiver sind als die Pulverlackvormischung 31 und hierdurch eine Qualitätsbeeinträchtigung der zweiten Pulverlackschmelze 3 vermieden wird. Die Wiederverwertung der Pulverlackpartikel 39 erfolgt somit einfach, flexibel und effizient.

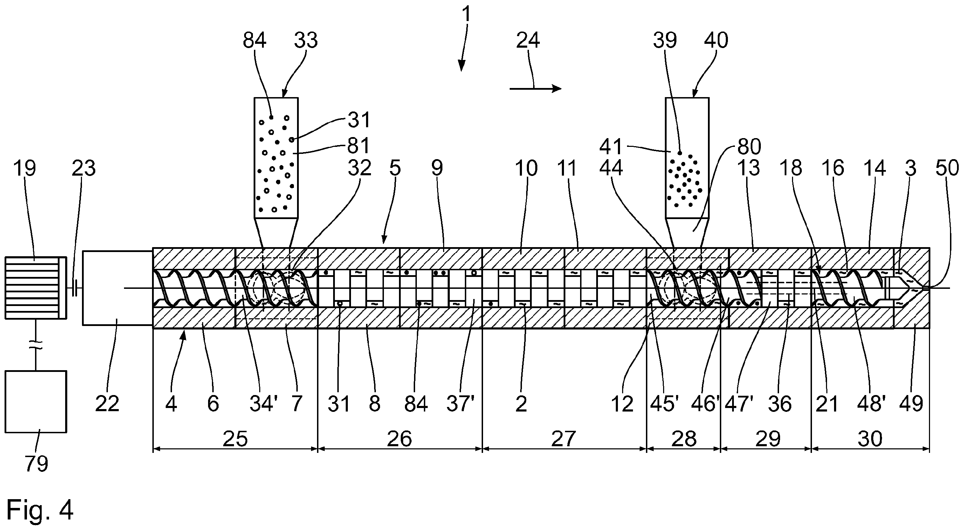

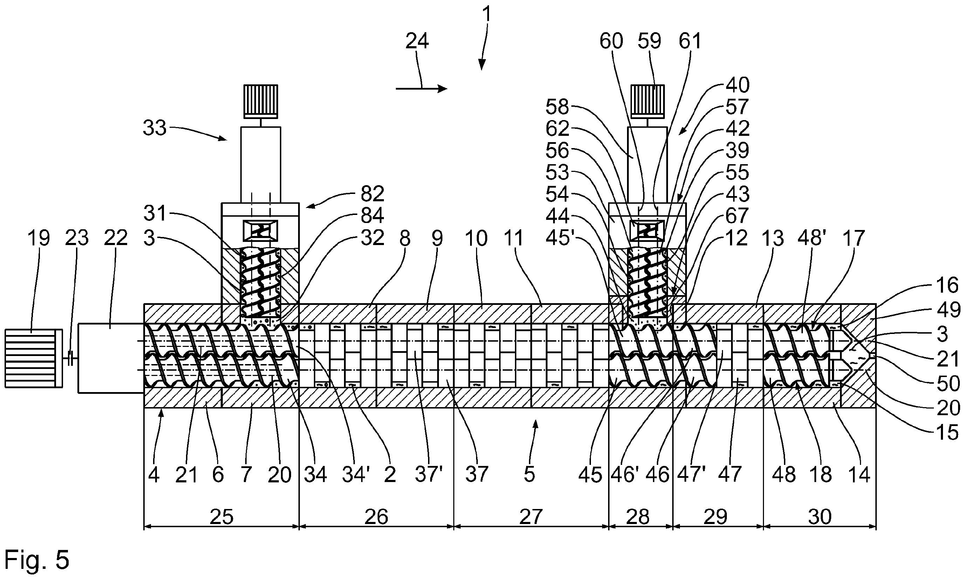

Nachfolgend ist anhand der Figuren 4 und 5 ein zweites Ausführungsbeispiel der Erfindung beschrieben. Im Unterschied zu dem vorangegangenen Ausführungsbeispiel weist die Vorrichtung 1 eine erste Zuführeinrichtung 33 auf, die einen gravimetrischen Dosierer 81 und eine Zuführ-Schneckenmaschine 82 umfasst. Der Dosierer 81 mündet in die Zuführ-Schneckenmaschine 82. Die Zuführ-Schneckenmaschine 82 ist direkt, also ohne einen Zuführeinsatz, in der Einzugszone 25 an das Gehäuse 5 angeschlossen, sodass in der Einzugszone 25 eine erste Zuführöffnung 32 seitlich in die Gehäusebohrungen 15, 16 bzw. in die Gehäusebohrung 16 mündet. Der Dosierer 81 und die Zuführ-Schneckenmaschine 82 sind entsprechend zu dem Dosierer 41 und der Zuführ-Schneckenmaschine 42 ausbildet.

Die Zuführeinrichtung 33 dient zum Zuführen von Pulverlackpartikeln 84, die nicht zur Pulverlackbeschichtung geeignet sind. Die Pulverlackpartikel 84 werden zusammen mit der Pulverlackvormischung 31 in der Einzugszone 25 zugeführt und zusammen mit der Pulverlackvormischung 31 in der Plastifizierzone 26 aufgeschmolzen und anschließend in der Homogenisierungszone 27 zu der ersten Pulverlackschmelze 2 homogenisiert. Die Menge an Pulverlackpartikeln 84, die mit der Pulverlackvormischung 31 zugeführt werden kann, wird durch die anschließende Plastifizierung und Homogenisierung bestimmt. Es können somit Pulverlackpartikel 84 in einer Menge zugeführt werden, die die Aufbereitung der Pulverlackvormischung 31 nicht beeinträchtigt, beispielsweise nicht die Qualität und/oder den Durchsatz beeinträchtigt. Die Zuführung und Wiederverwertung der Pulverlackpartikel 39 erfolgt entsprechend dem ersten Ausführungsbeispiel. Hinsichtlich des weiteren Aufbaus und der weiteren Funktionsweise der Vorrichtung 1 wird auf das vorangegangene Ausführungsbeispiel verwiesen.

Allgemein gilt:
In der Mischzone 29 können ausschließlich Schneckenelemente 46, 46' angeordnet sein. Die Mischzone 29 muss in diesem Fall ausreichend lang sein, um die zugeführten Pulverlackpartikel 39 einzumischen und insbesondere aufzuschmelzen. Durch das Anordnen von Knetelementen 47, 47' in der Mischzone 29 kann die Länge der Mischzone 29 verkürzt werden. Stromabwärts zu der Plastifizierzone 26, insbesondere zu der Homogenisierungszone 27, können Pulverlackpartikel 39 mit einer beliebigen Korngröße bzw. einem beliebigen Korndurchmesser zugeführt werden. Vorzugsweise werden Pulverlackfeinpartikel zugeführt. Die erforderliche Länge der Mischzone 29 hängt von der Viskosität der Pulverlackschmelze 2, der Schmelztemperatur, der Drehzahl der Behandlungselementwellen 17, 18 und der zugeführten Menge an Pulverlackpartikeln 39 ab. Die Pulverlackpartikel 39 können auch inmitten der Homogenisierungszone 27 zugeführt werden, solange die Aufbereitung der Pulverlackschmelze 2 nicht beeinträchtigt wird.

Eine vergleichsweise geringe Menge an Pulverlackpartikeln 84 kann auch in der Einzugszone 25 zugeführt werden, solange die Aufbereitung der Pulverlackvormischung 31 hierdurch nicht beeinträchtigt wird.

Da die Menge an zugeführten Pulverlackpartikeln 39 in weiten Grenzen variieren kann, ist es auch möglich, die gerade in der Trenneinrichtung 52 anfallenden Pulverlackpartikel 39 direkt, also ohne Zwischenschaltung eines Dosierers, in die Zuführ-Schneckenmaschine 42 zuzuführen, beispielsweise mittels einer pneumatischen Förderung.

Die Pulverlackpartikel 39 können auch über sogenannte Bigbags der zweiten Zuführeinrichtung 40 zugeführt werden.

Die Kühlung mittels Druckluft kann insbesondere während eines Stillstands der Mehrwellen-Schneckenmaschine 4 erfolgen. Der Stillstand wird beispielsweise anhand der Drehzahl des Antriebsmotors 19 oder durch in der Steuereinrichtung 79 vorliegende Steuersignale erkannt.

## Patentansprüche

1. Verfahren zur Herstellung einer Pulverlackschmelze, umfassend folgende Schritte:
- Bereitstellen einer Schneckenmaschine (4),
- Erzeugen einer ersten Pulverlackschmelze (2) aus einer Pulverlackvormischung (31) mittels der Schneckenmaschine (4),
- Zuführen von Pulverlackpartikeln (39) mittels einer Zuführ-Schneckenmaschine (42) in die in der Schneckenmaschine (4) befindliche erste Pulverlackschmelze (2), wobei die Zuführ-Schneckenmaschine (42) mittels mindestens einer Kühleinrichtung (68) kühlbar ist, und
- Erzeugen einer zweiten Pulverlackschmelze (3) durch Mischen der ersten Pulverlackschmelze (2) und der Pulverlackpartikel (39) mittels der Schneckenmaschine (4).

2. Verfahren nach Anspruch 1, **dadurch gekennzeichnet,**
**dass** die zugeführten Pulverlackpartikel (39) jeweils eine maximale Partikelabmessung Aₘₐₓ haben, wobei für mindestens 50 %, insbesondere für mindestens 70 %, und insbesondere für mindestens 90 % der zugeführten Pulverlackpartikel (39) gilt: Aₘₐₓ ≤ 100 µm, insbesondere Aₘₐₓ ≤ 80 µm, und insbesondere Aₘₐₓ ≤ 60 µm.

3. Verfahren nach Anspruch 1 oder 2, **dadurch gekennzeichnet,**
**dass** die zugeführten Pulverlackpartikel (39) jeweils eine maximale Partikelabmessung Aₘₐₓ haben, wobei für mindestens 50 %, insbesondere für mindestens 70 %, und insbesondere für mindestens 90 % der zugeführten Pulverlackpartikel (39) gilt: Aₘₐₓ ≥ 1 µm, insbesondere Aₘₐₓ ≥ 5 µm, und insbesondere Aₘₐₓ ≥ 10 µm.

4. Verfahren nach einem der vorangegangenen Ansprüche, **dadurch gekennzeichnet,**
**dass** die Pulverlackpartikel (39) vor einem Austragen der zweiten Pulverlackschmelze (3) aus der Schneckenmaschine (4) aufgeschmolzen werden.

5. Verfahren nach einem der vorangegangenen Ansprüche, **dadurch gekennzeichnet,**
**dass** das Zuführen der Pulverlackpartikel (39) stromabwärts einer Plastifizierzone (26), insbesondere stromabwärts einer Homogenisierungszone (27), der Schneckenmaschine (4) erfolgt.

6. Verfahren nach einem der vorangegangenen Ansprüche, **dadurch gekennzeichnet,**
**dass** das Zuführen der Pulverlackpartikel (39) in einer Zuführzone (28) der Schneckenmaschine (4) erfolgt, die stromabwärts zu einer Plastifizierzone (26) und stromaufwärts zu einer Mischzone (29) angeordnet ist.

7. Verfahren nach einem der vorangegangenen Ansprüche, **dadurch gekennzeichnet,**
**dass** die Pulverlackpartikel (39) mittels einer Zuführeinrichtung (40) in die Schneckenmaschine (4) zugeführt werden, die einen Dosierer (41) umfasst.

8. Verfahren nach einem der vorangegangenen Ansprüche, **dadurch gekennzeichnet,**
**dass** die Pulverlackpartikel (39) von einer Trenneinrichtung (51) bereitgestellt werden.

9. Verfahren nach einem der vorangegangenen Ansprüche, **dadurch gekennzeichnet,**
**dass** die Zuführ-Schneckenmaschine (42) mittels eines Zuführeinsatzes (43) an die Schneckenmaschine (4) angeschlossen ist, wobei der Zuführeinsatz (43) insbesondere gekühlt wird.

10. Verfahren nach einem der vorangegangenen Ansprüche, **dadurch gekennzeichnet,**
**dass** ein Gehäuse (53) und/oder mindestens eine Schneckenwelle (56, 57) und/oder ein Einlauftrichter (80) der Zuführ-Schneckenmaschine (42) gekühlt wird.

11. Vorrichtung zur Herstellung einer Pulverlackschmelze umfassend
- eine Schneckenmaschine (4) mit
-- einer ersten Zuführöffnung (32) zum Zuführen einer Pulverlackvormischung (31), und
-- einer stromabwärts angeordneten zweiten Zuführöffnung (44) zum Zuführen von Pulverlackpartikeln (39),
- einer Zuführeinrichtung (40) zum Zuführen der Pulverlackpartikel (39) durch die zweite Zuführöffnung (44) in die Schneckenmaschine (4),
**dadurch gekennzeichnet,**
**dass** die Zuführeinrichtung (40) eine Zuführ-Schneckenmaschine (42) umfasst, die mittels mindestens einer Kühleinrichtung (68) kühlbar ist.

12. Vorrichtung nach Anspruch 11, **dadurch gekennzeichnet,**
**dass** die zweite Zuführöffnung (44) zwischen einer Plastifizierzone (26), insbesondere einer Homogenisierungszone (27), und einer Austragsöffnung (50), insbesondere einer Mischzone (29), der Schneckenmaschine (4) angeordnet ist.

13. Vorrichtung nach Anspruch 11 oder 12, **dadurch gekennzeichnet, dass** die Zuführeinrichtung (40) einen Dosierer (41) umfasst.

14. Vorrichtung nach mindestens einem der Ansprüche 11 bis 13, **dadurch gekennzeichnet,**
**dass** die Zuführeinrichtung (40) zum Anschluss an die Schneckenmaschine (4) einen Zuführeinsatz (43) umfasst.

## Claims

1. A method for producing a powder coating melt, comprising the following steps:
- provision of a screw machine (4),
- production of a first powder coating melt (2) from a powder coating premix (31) by means of the screw machine (4),
- supply of powder coating particles (39) by means of a supply screw machine (42) into the first powder coating melt (2) present in the screw machine (4), wherein the supply screw machine (42) can be cooled by means of at least one cooling device (68), and
- production of a second powder coating melt (3) by mixing the first powder coating melt (2) and the powder coating particles (39) by means of the screw machine (4).

2. A method according to claim 1, **characterized in that** the supplied powder coating particles (39) each have a maximum particle dimension Aₘₐₓ, wherein for at least 50%, in particular for at least 70%, and in particular for at least 90% of the supplied powder coating particles (39): Aₘₐₓ ≤ 100 µm, in particular Aₘₐₓ ≤ 80 µm, and in particular Aₘₐₓ ≤ 60 µm.

3. A method according to claim 1 or 2, **characterized in that** the supplied powder coating particles (39) each have a maximum particle dimension Aₘₐₓ, wherein for at least 50%, in particular for at least 70%, and in particular for at least 90% of the supplied powder coating particles (39): Aₘₐₓ ≥ 1 µm, in particular Aₘₐₓ ≥ 5 µm, and in particular Aₘₐₓ ≥ 10 µm.

4. A method according to any one of the preceding claims, **characterized in that** the powder coating particles (39) are melted before the second powder coating melt (3) is discharged from the screw machine (4).

5. A method according to any one of the preceding claims, **characterized in that** the powder coating particles (39) are supplied downstream of a plasticization zone (26), in particular downstream of a homogenization zone (27), of the screw machine (4).

6. A method according to any one of the preceding claims, **characterized in that** the powder coating particles (39) are supplied in a supply zone (28) of the screw machine (4) which is arranged downstream of a plasticization zone (26) and upstream of a mixing zone (29).

7. A method according to any one of the preceding claims, **characterized in that** the powder coating particles (39) are supplied into the screw machine (4) by means of a supply device (40) which comprises a dosing unit (41).

8. A method according to any one of the preceding claims, **characterized in that** the powder coating particles (39) are provided by a separating device (51).

9. A method according to any one of the preceding claims, **characterized in that** the supply screw machine (42) is connected to the screw machine (4) by means of a supply insert (43), wherein the supply insert (43) is in particular cooled.

10. A method according to any one of the preceding claims, **characterized in that** a housing (53) and/or at least one screw shaft (56, 57) and/or an inlet hopper (80) of the supply screw machine (42) is cooled.

11. A device for producing a powder coating melt, comprising
- a screw machine (4) with
-- a first supply opening (32) for supplying a powder coating premix (31), and
-- a second supply opening (44) arranged downstream for supplying powder coating particles (39),
- a supply device (40) for supplying the powder coating particles (39) into the screw machine (4) through the second feed opening (44),
**characterized in that**
the supply device (40) comprises a supply screw machine (42) which can be cooled by means of at least one cooling device (68).

12. A device according to claim 11, **characterized in that** the second supply opening (44) is arranged between a plasticization zone (26), in particular a homogenization zone (27), and a discharge opening (50), in particular a mixing zone (29), of the screw machine (4).

13. A device according to claim 11 or 12, **characterized in that, that** the supply device (40) comprises a dosing unit (41).

14. A device according to at least one of claims 11 to 13, **characterized in that** the supply device (40) comprises a supply insert (43) for connection to the screw machine (4).

## Revendications

1. Procédé de fabrication d'une masse fondue de laque en poudre, comprenant les étapes suivantes :
- mise à disposition d'une machine à vis sans fin (4),
- production d'une première masse fondue de laque en poudre (2) à partir d'un prémélange de laque en poudre (31) au moyen de la machine à vis sans fin (4),
- alimentation de particules de laque en poudre (39) au moyen d'une machine d'alimentation à vis sans fin (42) dans la première masse fondue de laque en poudre (2) se trouvant dans la machine à vis sans fin (4), la machine d'alimentation à vis sans fin (42) pouvant être refroidie au moyen d'au moins un dispositif de refroidissement (68), et
- production d'une deuxième masse fondue de laque en poudre (3) en mélangeant la première masse fondue de laque en poudre (2) et les particules de laque en poudre (39) au moyen de la machine à vis sans fin (4).

2. Procédé selon la revendication 1, **caractérisé en ce que** les particules de laque en poudre (39) alimentées ont chacune une dimension maximale de particule Aₘₐₓ, dans lequel pour au moins 50 %, en particulier pour au moins 70 %, et en particulier pour au moins 90 % des particules de laque en poudre (39) alimentées : Aₘₐₓ ≤ 100 µm, en particulier Aₘₐₓ ≤ 80 µm, et en particulier Aₘₐₓ ≤ 60 µm.

3. Procédé selon la revendication 1 ou 2, **caractérisé en ce que** les particules de laque en poudre (39) alimentées ont chacune une dimension maximale de particule Aₘₐₓ, dans lequel pour au moins 50 %, en particulier pour au moins 70 %, et en particulier pour au moins 90 % des particules de peinture en poudre (39) alimentées : Aₘₐₓ ≥ 1 µm, en particulier Aₘₐₓ ≥ 5 µm, et en particulier Aₘₐₓ ≥ 10 µm.

4. Procédé selon l'une quelconque des revendications précédentes, **caractérisé en ce que** les particules de laque en poudre (39) sont fondues avant une évacuation de la deuxième masse fondue de laque en poudre (3) hors de la machine à vis sans fin (4).

5. Procédé selon l'une quelconque des revendications précédentes, **caractérisé en ce que** l'alimentation des particules de laque en poudre (39) s'effectue en aval d'une zone de plastification (26), en particulier en aval d'une zone d'homogénéisation (27), de la machine à vis sans fin (4).

6. Procédé selon l'une quelconque des revendications précédentes, **caractérisé en ce que** l'alimentation des particules de laque en poudre (39) s'effectue dans une zone d'alimentation (28) de la machine à vis sans fin (4), qui est disposée en aval d'une zone de plastification (26) et en amont d'une zone de mélange (29).

7. Procédé selon l'une quelconque des revendications précédentes, **caractérisé en ce que** les particules de laque en poudre (39) sont alimentées dans la machine à vis sans fin (4) au moyen d'un dispositif d'alimentation (40) qui comprend un doseur (41).

8. Procédé selon l'une quelconque des revendications précédentes, **caractérisé en ce que** les particules de laque en poudre (39) sont mises à disposition par un dispositif de séparation (51).

9. Procédé selon l'une quelconque des revendications précédentes, **caractérisé en ce que** la machine d'alimentation à vis sans fin (42) est raccordée à la machine à vis sans fin (4) au moyen d'un insert d'alimentation (43), l'insert d'alimentation (43) étant en particulier refroidi.

10. Procédé selon l'une quelconque des revendications précédentes, **caractérisé en ce qu'**un carter (53) et/ou au moins un arbre de vis sans fin (56, 57) et/ou une trémie d'entrée (80) de la machine d'alimentation à vis sans fin (42) est refroidi.

11. Dispositif de fabrication d'une masse fondue de laque en poudre comprenant
- une machine à vis sans fin (4) avec
-- une première ouverture d'alimentation (32) pour l'alimentation d'un prémélange de laque en poudre (31), et
-- une deuxième ouverture d'alimentation (44) disposée en aval pour l'alimentation en particules de laque en poudre (39),
- un dispositif d'alimentation (40) pour alimenter les particules de laque en poudre (39) à travers la deuxième ouverture d'alimentation (44) dans la machine à vis sans fin (4),
**caractérisé en ce que** le dispositif d'alimentation (40) comprend une machine d'alimentation à vis sans fin (42) qui peut être refroidie au moyen d'au moins un dispositif de refroidissement (68).

12. Dispositif selon la revendication 11, **caractérisé en ce que** la deuxième ouverture d'alimentation (44) est disposée entre une zone de plastification (26), en particulier une zone d'homogénéisation (27), et une ouverture d'évacuation (50), en particulier une zone de mélange (29), de la machine à vis sans fin (4).

13. Dispositif selon la revendication 11 ou 12, **caractérisé en ce que** le dispositif d'alimentation (40) comprend un doseur (41).

14. Dispositif selon au moins l'une quelconque des revendications 11 à 13, **caractérisé en ce que** le dispositif d'alimentation (40) comprend un insert d'alimentation (43) pour le raccordement à la machine à vis sans fin (4).
